# EUROPEAN PATENT APPLICATION

(11) **EP 1 156 087 A1**
(43) Date of publication of application: **21.11.2001**
(21) Application number: 00201778.8
(22) Date of filing: 19.05.2000
(51) Int. Cl.: C09D 15/00

(54) **High solid low solvent wood stain**

(71) Applicant: Korthals Groep B.V., 1970 AC Ijmuiden (NL)
(72) Inventor: Honders, Willem Jacob, 1981 EC Velsen (NL); Boot, Ronald, 2851 ZS Haastrecht (NL); De Roos, Gerardus Marinus, 2285 KA Rijswijk (NL)
(74) Representative: Jorritsma, Ruurd

(57) **Abstract**

The present invention relates to a wood stain comprising one or more pigments, a carrier and a solvent, having a solids content of more than 60 % by weight and containing an alkyd resin as the carrier. The alkyd resin is characterized by having an oil content of more than 70 % by weight, an acid value of less than 10 mg kOH/g resin, a viscosity of 900 to 1400 mPa.s, a weight average molecular weight (Mw) of 5,000 to 10,000 and a number average molecular weight (Mn) of 1,000 to 5,000.

## Description

Colored stains are used in the wood coating industry as a first layer for giving all kind of woods a transparent color, which differs from the original wood color. This first layer is re-coated with industrial one or two component clear wood finishes based on resins like alkyds, nitrocelluloses. acrylics and unsaturated polyesters.

The present day conventional stains are based on solvents or a mixture of solvents like aliphatic hydrocarbons, aromatic hydrocarbons, esters, etc. and colorants. The amount of hydrocarbon solvent in a conventional stain varies from 90 to 98 % by weight. The amount of colorant varies from 2 to 10 % by weight. The solvents, which are volatile serve on the one hand to dissolve the transparent colorants, on the other hand as a vehicle to apply the stain onto an object such as furniture by brushing or spraying. After application of the stain, the solvent will evaporate.

Due to the emission reduction policy of the western countries of organic solvents in coatings and stains in particular, there is a need for a more environmentally friendly stain compared to the present-day stains.

Waterborne stains with very low organic volatile compounds are developed and sold on the market. These are for instance described in US 5,116,408 and EP314,378. A disadvantage of waterborne stains is that after drying of the stain grain raising occurs with certain kind of woods, e.g. oak-wood, and sanding of the wood becomes necessary. When the waterborne stain is sanded there is a risk of damaging the stain that can cause color differences in the stain layer. Conventional stains do not cause grain raising and can therefore be re-coated without sanding.

The present invention aims at eliminating the drawbacks of both the conventional hydrocarbon solvent stains and the more recent waterborne stains. Therefore, the invention provides a wood stain in which the "vehicle" or carrier is a 100 % solid material including pigments, to which less than 30 % solvent is added.

According to the invention a wood stain comprising one or more pigments, a carrier and a solvent is provided, characterized in that it has a solids content of more than 50 % by weight and that the carrier is an alkyd resin. Preferably the wood stain has a solids content of more than 65 % by weight, more preferably more than 75 % by weight.

The amount of solids in the wood stain will be as high as possible to minimize the amount of solvent. In terms of processability the wood stain will generally have a maximum solids content of 90 % by weight. Less solvent would make it impossible to brush or spray the stain.

The advantages of the stain of the invention are:
- The reduction of emission of organic solvents with this stain is 72-75 % by weight compared to conventional stains.
- The stain is re-coatable with most of the industrial wood finishes like clear nitrocellulose-, alkyd-, acrylic-, two component acrylic- and polyester- isocyanate or UV curing-varnishes.
- A very bright appearance is obtained comparable to conventional stains. The stain does not show the hazy appearance, which waterborne stains often show to a certain extent.
- After drying of the stain no sanding of the wood is necessary, because the stain does not cause grain raising.
- The stain can be applied by the usual application methods of stains like rubbing with a cloth, brushing, spraying by pneumatic spray equipment or HVLP-spray equipment (high volume-low pressure), airless- and airmix-spray equipment.
- Due to the low molecular weight of the solid material the stain posses a low viscosity and a low surface tension by which a good penetration of the stain into the wood is obtained.
- Due to the good penetration of solid material into the wood the invented stain gives a better temporarily protection compared to conventional stains.
- The alkyd resin of the invention has low molecular weight and the viscosity of the resin decreases very rapid on adding solvent and therefore good wood penetration is obtained.

Alkyd resins have been used in the coatings industries since the 1940s. In general an alkyd resin is defined as the reaction product of a polyol, a polybasic acid and a monobasic acid (fatty acid or oil). Alkyd resins can be classified as drying or non-drying depending on the ability or their films to dry by air oxidation. The present alkyd resins are drying type resins.

A further classification is the type of fatty acid used. The present alkyd resins are based on vegetable oil fatty acids. Examples of vegetable oils that could be used are: castor oil, coconut oil, cottonseed oil, linseed oil, peanut oil, rapeseed oil, safflower oil, soyabean oil and sunflowerseed oil. The polyol can be selected from commonly applied polyols such as pentaerythritol, glycerol, trimethylolpropane, trimethylolethane and ethyleneglycol. The polybasic acid can be for example phthalic anhydride and isophthalic acid. The amount of polybasic acid in the alkyd resin of the present invention is preferably 4 to 10 % by weight. The amount of polyol is preferably 15 to 25 % by weight, based on the total weight of the resin.

A third classification is the oil length. The amount of fatty acid modification in the polyester structure of an alkyd resin prescribes such properties as solubility, compatibility and film hardness of the resin. Therefore, this is the most frequently encountered way of classifying alkyd resins. Alkyd resins are generally designated as short-oil, medium-oil, long-oil and very long-oil alkyd resins. The resin of the present invention is preferably a very long-oil alkyd resin.

The oil length or oil content can also be quantitatively defined as the weight percent of oil in the finished resin. The oil content of the alkyd resin of the present invention is preferably more than 70 % by weight, more preferably more than 80 % by weight. In general the alkyd resin will have an oil content of 87 to 92 % by weight.

The acid number is 10 mg kOH/ g resin at the most and the viscosity of the resin lies between 900-1400 mPa.s. The weight average molecular weight (Mw) of the alkyd resin is 5,000 to 10,000, preferably 6,000 to 8,000 and the number average molecular weight (Mn) is preferably 1,000 to 5,000, preferably 1500 to 3500.

The pigment pastes used are high solid pigment pastes with not more than 30 % volatile substances. The minimum solvent content of the pigment pastes is about 15 % by weight. Preferably, the pigments are also based on a 100 % by weight alkyd resin. The wood stain will contain 2 to 25 % by weight of pigment paste, based on the total weight of the stain. It is also possible to use a powdered pigment. In that case, in general the pigment powder will be first dispersed in a suitable carrier, preferably in the alkyd resin of the invention.

The wood stain of the invention contains 10 to 30 % solvent, preferably 20 to 25 % solvent. The solvent is a conventional solvent such as an aliphatic hydrocarbon solvent or any other suitable solvent.

The wood stain of the invention for instance contains

| | |
|---|---|
| Alkyd resin | 65.0 % by weight |
| White Spirit | 19.0 % by weight |
| Color paste red | 4.0 % by weight |
| Color paste yellow | 7.5 % by weight |
| Color paste blue | 1.5 % by weight |
| Color paste black | 3.0 % by weight |

The above wood stain is prepared by mixing and stirring the above mentioned ingredients.

The wood stain of the invention can be used industrially and can be coated with various coatings known to the skilled person, such as alkyd based coatings, 2-K acid hardening coatings, polyurethane coatings or NC coatings.

## Claims

1. Wood stain comprising one or more pigments, a carrier and a solvent, **characterized in that** it has a solids content of more than 50 % by weight and that the carrier is an alkyd resin.

2. Wood stain according to claim 1, which has a solids content of more than 65 % by weight, preferably more than 75 % by weight.

3. Wood stain according to claim 1 or 2, wherein the alkyd resin is a very long-oil alkyd resin.

4. Wood stain according to claim 3, wherein the alkyd resin has an oil content of more than 70 % by weight, preferably more than 80 % by weight.

5. Wood stain according to claim 3 or 4, wherein the alkyd resin has an acid value of less than 10 mg kOH/g resin.

6. Wood stain according to any of the preceding claims, wherein the alkyd resin has a viscosity of 900 to 1,400 mPa.s.

7. Wood stain according to any of the preceding claims, wherein the alkyd resin has a weight average molecular weight (Mw) of 5,000 to 10,000 and a number average molecular weight (Mn) of 1,000 to 5,000.

8. Wood stain according to any of the preceding claims, which comprises 50 to 85 % by weight of alkyd resin, 2 to 25 % by weight of pigment paste and 10 to 30 % by weight of solvent, based on the total weight of the wood stain.

9. Use of a very long oil alkyd resin having an oil content of more than 70 % by weight, an acid value of less than 10 mg kOH/g resin, a viscosity of 900 to 1,400 mPa.s, a weight average molecular weight (Mw) of 5,000 to 10,000 and a number average molecular weight (Mn) of 1,000 to 5,000 for the preparation of a wood stain.
